# EUROPÄISCHE PATENTSCHRIFT

(11) **EP 2 682 652 B1**
(45) Veröffentlichungstag und Bekanntmachung des Hinweises auf die Patenterteilung: **07.06.2017**
(21) Anmeldenummer: 12004916.8
(22) Anmeldetag: 03.07.2012
(51) Int. Cl.: F16K 7/06

(54) **Quetschventil**
Pinch valve
Vanne à manchon

(43) Veröffentlichungstag der Anmeldung: 08.01.2014
(73) Patentinhaber: FESTO AG & Co. KG, 73734 Esslingen (DE)
(72) Erfinder: Halama, Herbert, 73249 Wernau (DE); Erg, Markus, 73066 Uhingen (DE)
(74) Vertreter: Patentanwälte Magenbauer & Kollegen Partnerschaft mbB

(56) Entgegenhaltungen:
- EP-A1- 1 357 320
- EP-A1- 1 912 001
- DE-A1- 2 816 046
- US-A- 3 830 462

## Beschreibung

Die Erfindung betrifft ein Quetschventil, mit einem sich zwischen einem Medieneinlass und einem Medienauslass erstreckenden, einen das Hindurchströmen eines Hauptmediums ermöglichenden Hauptkanal umschließenden schlauchförmigen Ventilglied, mit einem sich in dem Hauptkanal unter Gewährleistung eines sowohl offenen Medieneinlasses als auch offenen Medienauslasses in der Längsrichtung des Hauptkanals erstreckenden und an seinem Außenumfang eine zum Zusammenwirken mit dem Ventilglied vorgesehene Ventilsitzfläche definierenden Ventilsitzkörper, und mit Betätigungsmitteln, durch die das schlauchförmige Ventilglied zwischen mindestens einer den Hauptkanal zum Hindurchströmen des Hauptmediums freigebenden Offenstellung und einer an der Ventilsitzfläche des Ventilsitzkörpers dicht anliegenden Schließstellung quer zu seiner Längsrichtung verformbar ist, wobei der Ventilsitzkörper in seinem Innern mindestens einen sich an der Ventilsitzfläche vorbei erstreckenden Zusatzkanal aufweist, durch den hindurch während einer gleichzeitig durch den Hauptkanal hindurch stattfindenden Strömung eines Hauptmediums ein Zusatzmedium hindurchströmen kann, wobei die Wandung des Ventilsitzkörpers innerhalb des Hauptkanals durchbrechungslos ausgebildet ist.

Ein aus der US 3,830,462 bekanntes Quetschventil verfügt über ein schlauchförmiges Ventilglied, durch das hindurch sich ein Hauptkanal erstreckt, der von einem an einem Medieneinlass zugeführten fließfähigen Medium durchströmbar ist. Der Durchgang zwischen dem Medieneinlass und einem stromab angeordneten Medienauslass ist durch Betätigungsmittel steuerbar, die eine das schlauchförmige Ventilglied umschließende ringförmige Feder aufweisen, welche durch Beaufschlagung eines axial verschiebbaren Antriebskolbens in ihrem Durchmesser verringerbar ist, um das Ventilglied radial zusammenzuquetschen. Durch den Hauptkanal hindurch erstreckt sich ein Ventilsitzkörper, der am Außenumfang einen radial orientierten Ventilsitz definiert, an dem das Ventilglied zur Einnahme einer Schließstellung ringsum dicht anlegbar ist. In einer Offenstellung des Ventilgliedes ergibt sich zwischen dem Ventilsitzkörper und dem Ventilglied ein ringförmiger Durchtrittsspalt, der das Hindurchströmen eines Mediums zwischen dem Medieneinlass zum Medienauslass gestattet.

Aus der DE 10 2006 048 573 B4 ist ein Quetschventil bekannt, das ebenfalls über ein schlauchförmiges, radial verformbares Ventilglied verfügt, bei dem allerdings der vom Ventilglied umschlossene Hauptkanal völlig frei ist, so dass die Schließstellung durch ein unmittelbares Aneinanderanlegen sich gegenüberliegender Wandabschnitte des Ventilgliedes definiert wird.

Aus der DE 29 41 278 A1 ist ein Kanülen- oder Katheteraggregat bekannt, das sich aus einem eine Kanülenröhre aufweisenden Grundkörper und einer diesbezüglich separaten Punktiernadeleinheit zusammensetzt. In dem Grundkörper befindet sich eine nach Art eines Quetschventils ausgebildete Einrichtung mit einem Schlauchstück und an dessen Außenumfang angeordneten Druckkörpern. Ist die Punktiernadeleinheit herausgezogen, nimmt das Schlauchstück eine Schließstellung ein, in der sich gegenüberliegende Schlauchwandabschnitte direkt aneinander anliegen. Die Punktiernadeleinheit ist in den Grundkörper einsteckbar, wobei sie im eingesteckten Zustand einen Einlass und einen Auslass des Quetschventils mit einerseits einer Kanülenröhre und andererseits einem Kopfabschnitt verschließt. Beim Herausziehen der Punktiernadeleinheit wird das Quetschventil betätigt und sein Schlauchstück legt sich vorübergehend an die im Herausziehen befindliche Kanülenröhre an. Die DE-A-28 16 046 offenbart ein Quetschventil der eingangs genannten Art, das über ein Gehäuse verfügt, in dem ein radial verformbarer Schlauchkörper angeordnet ist, der von einem Fluid durchströmbar ist. In den Schlauchkörper ragt ein Rohr hinein, das mittels eines aufgesteckten Schlauches verlängert ist. Der Schlauchkörper kann durch Fluidbeaufschlagung zusammengequetscht werden, so dass er sich unter Abdichtung außen an den Schlauch anlegt. Das hierzu verwendete Fluid kann durch das Rohr und den Schlauch hindurch abströmen, wenn die Fluidbeaufschlagung des Schlauchkörpers aufgehoben wird.

Der Erfindung liegt die Aufgabe zugrunde, die Anwendungsmöglichkeiten eines Quetschventils der eingangs genannten Art zu erweitern.

Zur Lösung dieser Aufgabe ist vorgesehen, dass der Ventilsitzkörper den Hauptkanal in dessen Längsrichtung vollständig durchsetzt, wobei sich der Ventilsitzkörper einschließlich des Zusatzkanals einerseits zumindest bis in den Bereich des Medieneinlasses und andererseits zumindest bis in den Bereich des Medienauslasses erstreckt, so dass die Strömung des Zusatzmediums die Strömung des Hauptmediums im Hauptkanal nicht beeinflusst.

Auf diese Weise bietet sich bei dem erfindungsgemäßen Quetschventil die Möglichkeit, für die Hindurchführung eines Mediums zusätzlich zu dem Hauptkanal mindestens einen weiteren Zusatzkanal zu nutzen. Das durch den Hauptkanal hindurchführbare Medium sei als Hauptmedium und das durch den mindestens einen Zusatzkanal hindurchleitbare Medium als Zusatzmedium bezeichnet. Diese beiden Medien können unterschiedliche Medien sein und/oder unterschiedlichen Zwecken dienen. Andererseits kann ein als Hauptmedium durch den Hauptkanal hindurchgeleitetes Medium bei entsprechender Anwendung des Quetschventils als Zusatzmedium durch mindestens einen Zusatzkanal hindurch zurückgeleitet werden oder umgekehrt, sodass es sich bei dem Hauptmedium und dem Zusatzmedium um ein und dasselbe Medium handelt. Die Steuerung des Mediendurchganges durch den Hauptkanal unter Einsatz der Betätigungsmittel wirkt sich nicht auf den Mediendurchgang durch den bevorzugt ständig offenen Zusatzkanal aus. Besonders vorteilhaft ist der Umstand, dass das Quetschventil einen Betriebszustand ermöglicht, bei dem gleichzeitig sowohl der Hauptkanal als auch der mindestens eine Zusatzkanal von einem Medium durchströmbar ist oder durchströmt wird. Die Präsenz des Ventilsitzkörpers in dem schlauchförmigen Ventilglied verhindert nicht die Möglichkeit eines Hindurchfließens des Hauptmediums durch den Medieneinlass und den Medienauslass hindurch.

Vorteilhafte Weiterbildungen der Erfindung gehen aus den Unteransprüchen hervor.

Der Ventilsitzkörper ist von einem Zusatzkanal zweckmäßigerweise koaxial durchsetzt. Die damit verbundene geradlinige Strömungsführung ermöglicht ein besonders verlustarmes Hindurchströmen des Zusatzmediums durch den Zusatzkanal.

In dem Ventilsitzkörper ist zweckmäßigerweise nur ein einziger Zusatzkanal ausgebildet. Gleichwohl besteht die Möglichkeit, im Innern des Ventilsitzkörpers mehrere Zusatzkanäle vorzusehen, die zweckmäßigerweise parallel zueinander verlaufen.

Das Quetschventil enthält zweckmäßigerweise ein Ventilgehäuse, in dem das schlauchförmige Ventilglied angeordnet ist und an dem der Ventilsitzkörper axial beidseits der Ventilsitzfläche zum einen im Bereich des Medieneinlasses und zum anderen im Bereich des Medienauslasses fixiert ist.

Zur Fixierung des Ventilsitzkörpers bezüglich des Ventilgehäuses sind zweckmäßigerweise zwei Befestigungskörper vorhanden, deren einer im Bereich des Medieneinlasses und deren anderer im Bereich des Medienauslasses am Ventilgehäuse fixiert ist, vorzugsweise in lösbarer Weise. Jeder Befestigungskörper ist zweckmäßigerweise als Schraubglied ausgebildet, das in das Ventilgehäuse einschraubbar oder eingeschraubt ist. Bei dem Ventilsitzkörper handelt es sich zweckmäßigerweise um ein bezüglich mindestens eines Befestigungskörpers und vorzugsweise bezüglich beider Befestigungskörper separates Bauteil.

Zur Fixierung des Ventilsitzkörpers ist jeder Befestigungskörper bevorzugt in axialer Richtung von einer Aufnahmebohrung durchsetzt, die insbesondere koaxial ausgerichtet ist. In jede Aufnahmebohrung ist der Ventilsitzkörper mit einem bevorzugt rohrförmigen Befestigungsabschnitt eingesetzt und insbesondere eingesteckt. Der derart montierte Ventilsitzkörper ragt bevorzugt an beiden Befestigungskörpern an der der Ventilsitzfläche axial entgegengesetzten Seite mit einem Endabschnitt heraus. Diese Endabschnitte sind besonders bequem nutzbar, um ein Zusatzmedium einzuspeisen oder abzuführen.

Vorzugsweise sind sowohl der Medieneinlass als auch der Medienauslass von jeweils einem der beiden Befestigungskörper definiert. Der betreffende Befestigungskörper verfügt zu diesem Zweck bevorzugt über eine oder mehrere axiale Durchbrechungen.

Der dem Medienauslass zugeordnete Befestigungskörper verfügt an der dem Ventilglied axial abgewandten Seite zweckmäßigerweise über eine sich in Richtung zum Ventilglied hin konisch verjüngende Ausnehmung, die zur Aufnahme eines Befüllstutzens eines mit dem Hauptmedium zu befüllenden Behältnisses ausgebildet ist. Der Ventilsitzkörper ragt zweckmäßigerweise mit einem rohrförmigen Endabschnitt in bevorzugt koaxialer Weise in die Ausnehmung hinein.

Insbesondere wenn das Quetschventil verwendet werden soll, um mittels des durch das Ventilglied hindurchströmenden Hauptmediums ein Behältnis zu befüllen, ist es von Vorteil, wenn am Außenumfang des Ventilsitzkörpers eine das hindurchströmende Hauptmedium in Rotation versetzende Drallerzeugungsstruktur angeordnet ist. Wie sich gezeigt hat, ergibt sich bei einem derart rotierenden Hauptmedium ein besonders hoher Durchsatz beim Befüllen eines Behältnisses mit stark reduzierter Neigung zum Aufschäumen.

Die Drallerzeugungsstruktur kann beispielsweise von mehreren radial abstehenden Drallerzeugungsflügeln gebildet sein. Als besonders vorteilhaft wird allerdings die Realisierung in Form eines Wendelkörpers angesehen.

Der Außendurchmesser der Drallerzeugungsstruktur vergrößert sich zweckmäßigerweise in Richtung zum Medienauslass hin. Dies hat den Vorteil einer besonders einfachen Unterbringung im Innern des Hauptkanals ohne Beeinträchtigung der radialen Verformbarkeit des schlauchförmigen Ventilgliedes. Wird das schlauchförmige Ventilglied zwecks Erhalt seiner Schließstellung radial zusammengequetscht, nimmt es in der Regel eine sich ausgehend von seinen beiden axialen Endabschnitten zum mittleren Bereich hin verjüngende Gestalt ein, wobei sich der Hauptkanal ausgehend von dem abgesperrten Längenabschnitt in Richtung zum Medienauslass trichterähnlich erweitert. In diesen Längenabschnitt des Hauptkanals lässt sich der sich in Richtung zur Ventilsitzfläche in seiner Außenkontur verjüngende Wendelkörper optimal und platzsparend integrieren.

Prinzipiell kann eine Drallerzeugungsstruktur entweder zwischen der Ventilsitzfläche und dem Medieneinlass oder zwischen der Ventilsitzfläche und dem Medienauslass oder in beiden Bereichen angeordnet sein. Als besonders vorteilhaft wird eine ausschließliche Anordnung in dem zwischen der Ventilsitzfläche und dem Medienauslass liegenden Längenabschnitt des Hauptkanals angesehen.

Die Betätigungsmittel sind vorzugsweise zur mechanischen Beaufschlagung des Ventilgliedes ausgebildet. Eine alternative Ausführungsform sieht vor, dass das Ventilglied zum Verformen zwischen seiner Offenstellung und seiner Schließstellung direkt mittels eines Betätigungsfluides beaufschlagbar ist, das auf die Außenumfangsfläche des schlauchförmigen Ventilgliedes einwirkt. Während ein derartiges, rein durch Fluidkraft betätigbares Quetschventil insbesondere in einer Ausführungsform "Normalerweise offen" realisierbar ist, eignet sich ein Quetschventil mit mechanisch betätigtem Ventilglied auch und insbesondere zur Realisierung einer Ausführungsform vom Typ "Normalerweise geschlossen". Die mit "normalerweise" charakterisierte Stellung ist hierbei diejenige Stellung, die das Quetschventil im deaktivierten Zustand seiner Betätigungsmittel einnimmt.

In Verbindung mit einer mechanischen Beaufschlagung des Ventilgliedes enthalten die Betätigungsmittel zweckmäßigerweise mehrere auf axialer Höhe der Ventilsitzfläche entlang des Außenumfanges des schlauchförmigen Ventilgliedes verteilt angeordnete Stempelglieder, die durch Aufbringen einer Stellkraft in bezüglich der Längsachse des Ventilgliedes radialer Richtung beweglich sind, um mehr oder weniger stark auf den Außenumfang des Ventilgliedes einzuwirken und dadurch dessen Umfangswand so zu verformen, dass sich mindestens eine Offenstellung oder die Schließstellung des Ventilgliedes ergibt. Bevorzugt enthalten die Betätigungsmittel genau zwei Stempelglieder, die auf einander bezüglich der Längsachse des Ventilgliedes diametral entgegengesetzten Seiten platziert sind und deren Bewegungsrichtungen zusammenfallen.

Zum Antreiben der Stempelglieder verfügen die Betätigungsmittel zweckmäßigerweise über einen das Ventilglied konzentrisch umschließenden und durch Fluidkraft zu einer Antriebsbewegung in der Längsrichtung des Ventilgliedes antreibbaren Antriebskolben, der im Rahmen von Mitteln, die eine Kraftumlenkung bewirken, zur Erzeugung der Stellkraft mit den Stempelgliedern kooperiert. Auf diese Weise wird die bezüglich der Längsachse des Ventilgliedes axiale Antriebsbewegung des Antriebskolbens in eine bezüglich der vorgenannten Längsachse radiale Arbeitsbewegung der Stempelglieder konvertiert.

Der Ventilsitzkörper verfügt zweckmäßigerweise über einen die Ventilsitzfläche definierenden Ventilsitzabschnitt, wobei jedes Stempelglied an seiner dem Ventilglied zugewandten inneren Stirnfläche zweckmäßigerweise eine an die Außenkontur des Ventilsitzabschnittes angepasste Aussparung aufweist, so dass in der Schließstellung des Ventilgliedes eine den Hauptkanal umgrenzende Umfangswand des Ventilgliedes von den Begrenzungsflächen der Aussparungen der Stempelglieder an die Ventilsitzfläche dichtend angedrückt wird.

Im Querschnitt des Ventilsitzkörpers gesehen kann die Ventilsitzfläche prinzipiell jede geeignete Kontur aufweisen. Besonders vorteilhaft ist es allerdings, wenn der Ventilsitzkörper in diesem Bereich eine im Querschnitt gesehen längliche Außenkontur mit einer zur Bewegungsrichtung der Stempelglieder rechtwinkeligen Querschnitt-Längsachse aufweist. An einander entgegengesetzten Seiten verfügt der Ventilsitzabschnitt hierbei zweckmäßigerweise über flügelartig abstehende Vorsprünge, an denen sich die Umfangswand des Ventilgliedes dichtend anlegen kann.

Insbesondere dann, wenn die Betätigungsmittel zwei von einander entgegengesetzten Seiten her mit dem Ventilglied kooperierende Stempelglieder aufweisen, zeichnet sich die Schließstellung des Ventilgliedes dadurch aus, dass es einerseits mit Abschnitten seiner Umfangswand unter Abdichtung an der Ventilsitzfläche anliegt und andererseits auch weitere Umfangsabschnitte des Ventilgliedes, die sich in der Bewegungsrichtung der Stempelglieder gegenüberliegen, dichtend unmittelbar aneinander anliegen. Das schlauchförmige Ventilglied weist in diesem Fall bei Einnahme der Schließstellung im Querschnitt gesehen zweckmäßigerweise eine flache Formgebung mit Auswölbungen in dem mit dem Ventilsitzträger kooperierenden Bereich auf.

Nachfolgend wird die Erfindung anhand der beiliegenden Zeichnung näher erläutert. In dieser zeigen:

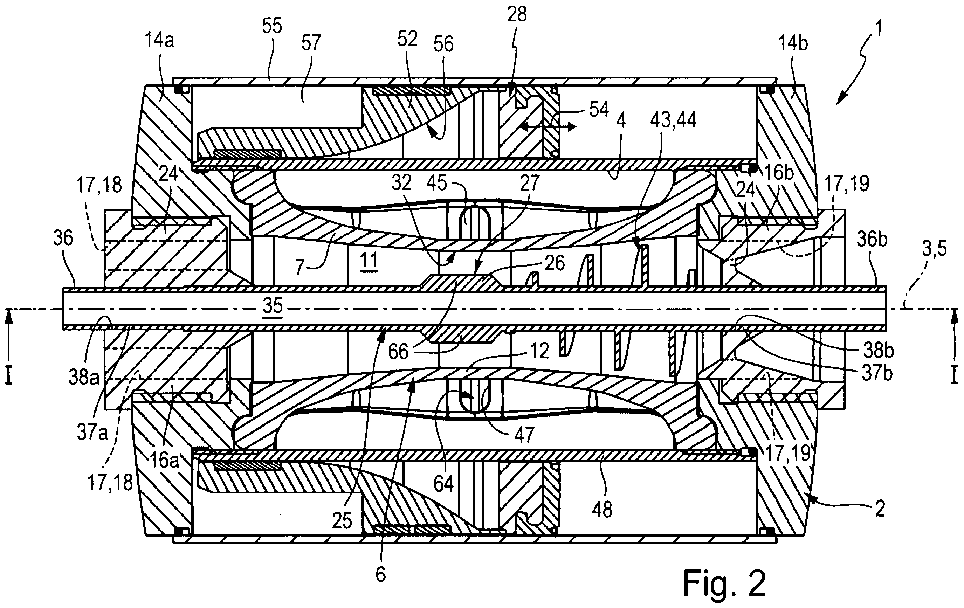

- Figur 1: eine bevorzugte Ausführungsform des erfindungsgemäßen Quetschventils in einem Längsschnitt gemäß Schnittlinie I-I aus Figuren 2 und 3 in einer maximalen Offenstellung des Ventilgliedes,
- Figur 2: einen weiteren Querschnitt des Quetschventils im gleichen Betriebszustand wie in Figur 1 und gemäß Schnittlinie II-II aus Figur 3,
- Figur 3: das Quetschventil in dem aus Figuren 1 und 2 ersichtlichen Betriebszustand in einem Querschnitt gemäß Schnittlinie III-III aus Figur 1,

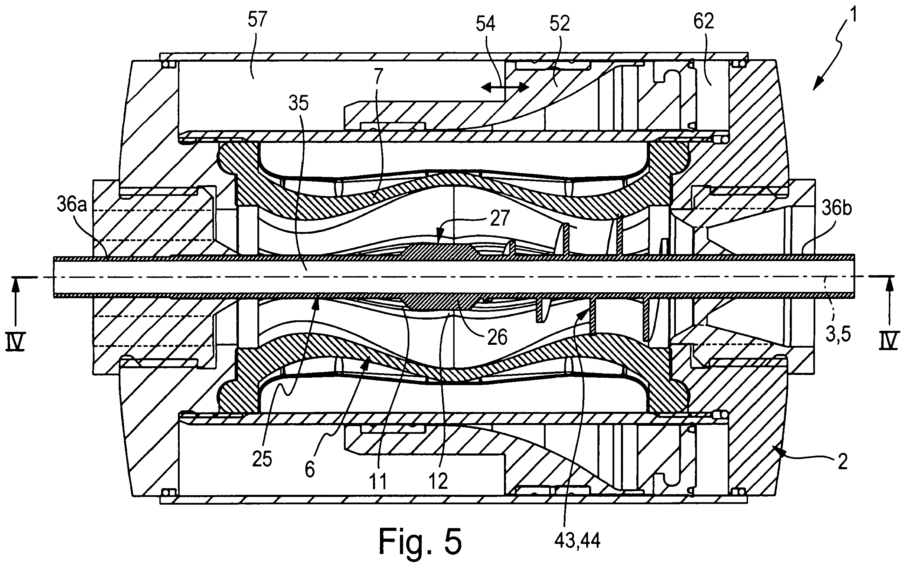

- Figur 4: das Quetschventil in einem Längsschnitt gemäß Schnittlinie IV-IV aus Figuren 5 und 6 in der Schließstellung des schlauchförmigen Ventilgliedes,
- Figur 5: das Quetschventil im Betriebszustand der Schließstellung des Ventilgliedes in einem Längsschnitt gemäß Schnittlinie V-V aus Figur 6, und
- Figur 6: einen Querschnitt durch das Quetschventil in der Schließstellung des Ventilgliedes gemäß Schnittlinie VI-VI aus Figur 4.

Das aus der Zeichnung ersichtliche Quetschventil 1 verfügt über ein Ventilgehäuse 2 mit einer Längsachse 3 und definiert in seinem Innern eine Arbeitskammer 4, in die ein eine Längsachse 5 aufweisendes schlauchförmiges Ventilglied 6 eingesetzt ist.

Das schlauchförmige Ventilglied 6 hat eine zu der Längsachse 5 konzentrische Umfangswand 7, die über gummielastische Eigenschaften verfügt und insbesondere aus einem Elastomermaterial besteht. Die Umfangswand 7 umgrenzt einen im Folgenden als Hauptkanal 11 bezeichneten Hohlraum, der das Ventilglied 6 axial durchsetzt und an beiden axialen Stirnseiten des Ventilgliedes 6 ausmündet.

Aufgrund seiner gummielastischen Eigenschaften ist das Ventilglied 6 zumindest in einem im Folgenden als Arbeitsabschnitt 12 bezeichneten Längenabschnitt radial verformbar. Genauer gesagt bezieht sich die Verformbarkeit auf die Umfangswand 7 in zumindest dem Bereich des Arbeitsabschnittes 12. Der Arbeitsabschnitt 12 ist zweckmäßigerweise axial mittig zwischen zwei einander axial entgegengesetzten ersten und zweiten Endabschnitten 13a, 13b der Umfangswand 7 angeordnet.

Die Endabschnitte 13a, 13b sind bevorzugt flanschartig gestaltet und stützen sich an einer ersten beziehungsweise zweiten stirnseitigen Abschlusswand 14a, 14b des Ventilgehäuses 2 unter Abdichtung ab. Jede Abschlusswand 14a, 14b weist eine axiale Durchbrechung 15 auf, die mit dem Hauptkanal 11 fluchtet.

In der axialen Durchbrechung 15 der ersten Abschlusswand 14a sitzt ein erster Befestigungskörper 16a. In bevorzugt vergleichbarer Weise ist in der axialen Durchbrechung 15 der zweiten Abschlusswand 14b ein zweiter Befestigungskörper 16b fixiert. Auf die Befestigungsfunktion der Befestigungskörper 16a, 16b wird später noch eingegangen. Jedenfalls ist jeder Befestigungskörper 16a, 16b einfach oder mehrfach axial durchbrochen, wobei durch besagte mindestens eine Durchbrechung 17 im Falle des ersten Befestigungskörpers 16a ein Medieneinlass 18 und im Falle des zweiten Befestigungskörpers 16b ein Medienauslass 19 definiert wird. Der Hauptkanal 11 kommuniziert ständig mit sowohl dem Medieneinlass 18 als auch dem Medienauslass 19.

Beim Ausführungsbeispiel sind sowohl der Medieneinlass 18 als auch der Medienauslass 19 von mehreren um die Längsachse 3 herum verteilt angeordneten Durchbrechungen 17 gebildet, die radial zwischen einem hülsenförmigen Innenabschnitt 23 und einem diesbezüglich einen größeren Durchmesser aufweisenden hülsenförmigen Außenabschnitt 22 des jeweiligen Befestigungskörpers 16a, 16b angeordnet und voneinander durch radiale Haltestreben 24 getrennt sind, die sich zwischen dem Innenabschnitt 23 und dem Außenabschnitt 22 erstrecken. Mehrere Haltestreben 24 sind in der Umfangsrichtung des betreffenden Befestigungskörpers 16a, 16b mit Abstand verteilt zueinander angeordnet.

Die Fixierung des Befestigungskörpers 16a, 16b an der zugeordneten Abschlusswand 14a, 14b erfolgt bevorzugt mittels des jeweiligen Außenabschnittes 22. Beim Ausführungsbeispiel ist hierzu in vorteilhafter Weise eine Schraubverbindung vorgesehen. Der Befestigungskörper 16a, 16b weist am Außenumfang des Außenabschnittes 22 ein Außengewinde auf, mit dem er in ein am Innenumfang der zugeordneten axialen Durchbrechung 15 ausgebildetes Innengewinde eingreift.

Durch die Haltestreben 24 wird der hülsenförmige Innenabschnitt 23 bezüglich des hülsenförmigen Außenabschnittes 22 starr festgehalten.

Solange die Verbindung zwischen dem Medieneinlass 18 und dem Medienauslass 19 nicht abgesperrt ist, kann ein durch den Medieneinlass 18 hindurch eingespeistes fließfähiges Hauptmedium durch den Hauptkanal 11 hindurchtreten und nach anschließendem Durchtritt durch den Medienauslass 19 wieder aus dem Quetschventil 1 austreten.

Bei dem Hauptmedium handelt es sich um jedes beliebige fließfähige Medium, wobei insbesondere, jedoch nicht ausschließlich, an eine Flüssigkeit gedacht ist.

Durch den Hauptkanal 11 hindurch erstreckt sich, in einer bevorzugt koaxialen Anordnung, ein längliches Bauteil, das aufgrund einer seiner Funktionen als Ventilsitzkörper 25 bezeichnet wird. Der Ventilsitzkörper 25 weist in einem Längenabschnitt, der im Folgenden als Ventilsitzabschnitt 26 bezeichnet wird, an seinem radial nach außen orientierten Außenumfang eine sich in der Umfangsrichtung rings um den Ventilsitzkörper 25 herum erstreckende Ventilsitzfläche 27 auf. Der Ventilsitzabschnitt 26 mit der Ventilsitzfläche 27 befinden sich in einem Bereich, der bezüglich der Längsachse 3 auf gleicher axialer Höhe mit dem radial verformbaren Arbeitsabschnitt 12 der Umfangswand 7 liegt.

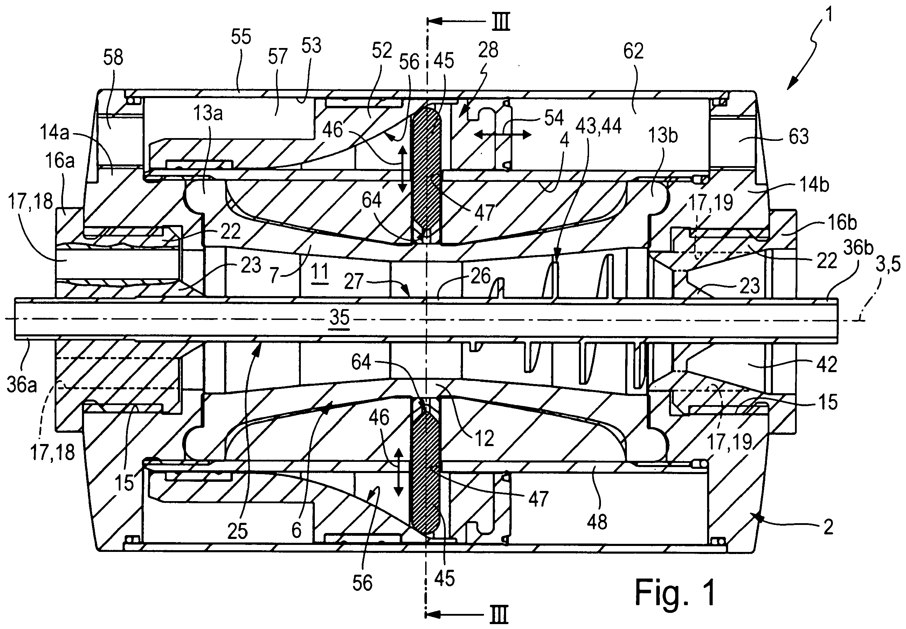

Das Ventilglied 6 kann je nach Verformungsgrad des Arbeitsabschnittes 12 unterschiedliche Offenstellungen oder eine Schließstellung einnehmen. In den Offenstellungen, von denen in Figur 1 eine maximale Offenstellung gezeigt ist, liegt rings um den Ventilsitzkörper 25 herum zwischen dem Ventilsitzkörper 25 und der Umfangswand 7 ein freier Ringraum vor, durch den hindurch das Hauptmedium ungehindert vom Medieneinlass 18 zum Medienauslass 19 überströmen kann. In der Schließstellung ist die Umfangswand 7 durch im Folgenden noch zu erläuternde Betätigungsmittel 28 des Quetschventils 1 derart radial zusammengequetscht, dass der Hauptkanal 11 abgesperrt und ein Medienübertritt vom Medieneinlass 18 zum Medienauslass 19 verhindert ist. Hierbei ist die Ventilsitzfläche 27 in Aktion, indem das Ventilglied 6 mit der Innenfläche 32 des Arbeitsabschnittes 12 dichtend an der Ventilsitzfläche 27 anliegt.

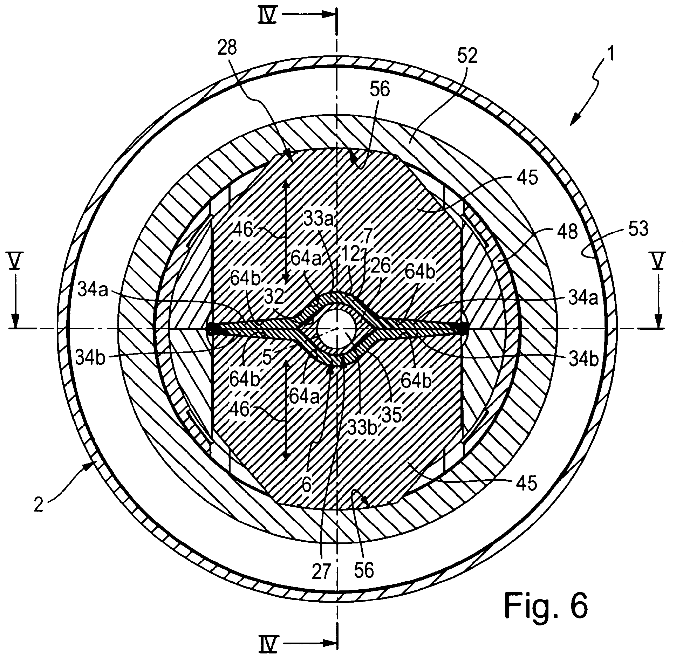

Aufgrund der beim Ausführungsbeispiel gewählten Ausgestaltung der Betätigungsmittel 28 ist die Schließstellung des Ventilgliedes 6 außerdem auch noch dadurch gekennzeichnet, dass nicht mit der Ventilsitzfläche 27 kooperierende Abschnitte der Innenfläche 32 des Arbeitsabschnittes 12 direkt unter Abdichtung aneinander angedrückt werden. Dies hängt damit zusammen, dass die Umfangserstreckung der Umfangswand 7 im Bereich des Arbeitsabschnittes 12 in den Offenstellungen des Ventilgliedes 6 größer ist als der Außenumfang des Ventilsitzabschnittes 26, so dass im radial zusammengequetschten Zustand nicht der gesamte Arbeitsabschnitt 12 an der Ventilsitzfläche 27 anliegen kann. Gemäß Figur 6 verfügt der Arbeitsabschnitt 12 über ein Paar sich bezüglich der Längsachse 5 diametral gegenüberliegender erster Wandabschnitte 33a, 33b, die in der Schließstellung an der Ventilsitzfläche 27 anliegen, und darüber hinaus über zwei sich beidseits an das Paar erster Wandabschnitte 33a, 33b anschließende Paare zweiter Wandabschnitte 34a, 34b, die in der Schließstellung des Ventilgliedes 6 mit ihren Innenflächen direkt unter Abdichtung aneinander anliegen.

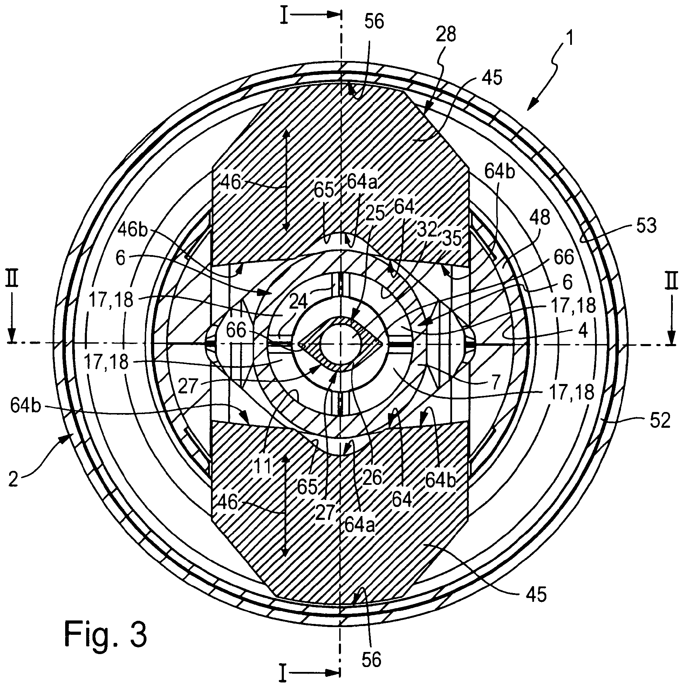

Bei dem Ventilglied 6 handelt es sich zweckmäßigerweise um einen Formkörper, der im unbeaufschlagten Neutralzustand die aus Figuren 1 und 3 ersichtliche maximale Offenstellung einnimmt. Er befindet sich stets dann in dieser maximalen Offenstellung, wenn auf seinen Außenumfang keine ein Verformen bezweckende Stellkraft ausgeübt wird.

Der Ventilsitzkörper 25 fungiert auch als Kanalkörper, indem er in seinem Innern von mindestens einem als Zusatzkanal 35 bezeichneten Strömungskanal durchsetzt ist. Der mindestens eine Zusatzkanal 35 ist so angeordnet, dass er die außen angeordnete Ventilsitzfläche 27 im Innern des Ventilsitzkörpers 25 passiert. Mit anderen Worten erstreckt sich die Ventilsitzfläche 27 rings um den Zusatzkanal 25 herum und die beiden einander entgegengesetzten Endabschnitte des Zusatzkanals 35 liegen axial beidseits der Ventilsitzfläche 27. Der Zusatzkanal 35 durchsetzt den Ventilsitzabschnitt 26.

Durch den Zusatzkanal 35 kann ein als Zusatzmedium bezeichenbares Medium bevorzugt unabhängig davon hindurchgeleitet werden, ob das schlauchförmige Ventilglied 6 eine Offenstellung oder seine Schließstellung einnimmt. Insbesondere besteht die Möglichkeit, durch den Zusatzkanal 35 ein Zusatzmedium hindurchzuleiten, wenn zur gleichen Zeit der Hauptkanal 11 von einem Hauptmedium durchströmt wird. Die Strömung des Zusatzmediums beeinflusst dabei die Strömung des Hauptmediums nicht.

Der Zusatzkanal 35 erstreckt sich zweckmäßigerweise einerseits zumindest bis in den Bereich des Medieneinlasses 18 und andererseits bis in den Bereich des Medienauslasses 19. Exemplarisch ragt er sogar jeweils ein Stückweit axial über den Medieneinlass 18 und den Medienauslass 19 hinaus.

Bei dem bevorzugten Ausführungsbeispiel enthält der Ventilsitzkörper 25 nur einen einzigen Zusatzkanal 35. Dieser einzige Zusatzkanal 35 ist bevorzugt querschnittsmittig in dem Ventilsitzkörper 25 angeordnet und verläuft mit linearer Erstreckung koaxial durch den Ventilsitzkörper 25 hindurch. Der Ventilsitzkörper 25 hat zwei einander axial entgegengesetzte erste und zweite Endabschnitte 36a, 36b, an denen sich jeweils stirnseitig eine von zwei Kanalmündungen des Zusatzkanals 35 befindet.

Der Ventilsitzkörper 25 ist bevorzugt rohrförmig ausgebildet und verfügt zweckmäßigerweise über zwei jeweils einen der beiden Endabschnitte 36a, 36b definierende rohrförmige Befestigungsabschnitte 37a, 37b, die sich axial beidseits an den Ventilsitzabschnitt 26 anschließen. Mit Hilfe dieser Befestigungsabschnitte 37a, 37b ist der Ventilsitzkörper 25 im Bereich sowohl des Medieneinlasses 18 als auch des Medienauslasses 19 bezüglich des Ventilgehäuses 2 fixiert. Die Fixierung geschieht bevorzugt mittels der beiden Befestigungskörper 16a, 16b.

Der erste Befestigungsabschnitt 37a ist von einer ersten Aufnahmebohrung 38a axial durchsetzt. Eine zweite Aufnahmebohrung 38b durchsetzt axial den zweiten Befestigungsabschnitt 37b. Der Ventilsitzkörper 25 ist nun mit seinem einen, ersten Befestigungsabschnitt 37a in die erste Aufnahmebohrung 38a eingesteckt und mit seinem anderen, zweiten Befestigungsabschnitt 37b in die zweite Aufnahmebohrung 38b. Auf diese Weise ist der Ventilsitzkörper 25 bezüglich des Ventilgehäuses 2 ortsfest gehalten. Mindestens einer der Befestigungsabschnitte 37a, 37b kann in die zugeordnete Aufnahmebohrung 38a, 38b beispielsweise eingepresst, eingeklebt oder eingeschraubt sein. Mindestens ein und bevorzugt genau ein Befestigungsabschnitt 37a oder 37b kann auch einstückig mit dem Ventilsitzkörper 25 ausgebildet sein.

Die Aufnahmebohrungen 38a, 38b sind beim Ausführungsbeispiel von den Durchgangsöffnungen der hülsenförmigen Innenabschnitte 23 der Befestigungskörper 16a, 16b gebildet.

Der Ventilsitzkörper 25 hat bevorzugt eine derartige Länge, dass seine beiden rohrförmigen Befestigungsabschnitte 37a, 37b jeweils an der dem Ventilglied 6 abgewandten Seite axial außen aus dem zugeordneten Befestigungskörper 16a, 16b herausragen.

Das Quetschventil 1 kann in vorteilhafter Weise als Befüllventil zum Abfüllen von Flaschen oder sonstigen Behältnissen genutzt werden. In diesem Zusammenhang weist der den Medienauslass 19 definierende zweite Befestigungskörper 16b eine axial nach außen hin offene und sich in Richtung zum Ventilglied 6 hin konisch verjüngende Ausnehmung 42 auf, in die während eines Befüllvorganges ein Befüllstutzen eines mit dem Hauptmedium zu befüllenden Behältnisses unter Abdichtung einführbar ist. In ein derart positioniertes Behältnis kann sodann, vorzugsweise bei in der Schließstellung befindlichem Ventilglied 6, durch den Zusatzkanal 35 hindurch ein Hilfsgas in das Behältnis eingeleitet werden, das beispielsweise einer Schaumbildung entgegenwirkt. Anschließend kann durch Öffnen des Ventilgliedes 6 das in das Behältnis einzufüllende Hauptmedium, beispielsweise ein Getränk, an dem Ventilsitzkörper 25 vorbei und durch den Medienauslass 19 hindurch in das Behältnis eingefüllt werden, wobei dieses Hauptmedium das bis dahin noch im Behältnis befindliche Hilfsgas durch den Zusatzkanal 35 hindurch wieder aus dem Behältnis verdrängt.

Insbesondere, jedoch nicht ausschließlich in Verbindung mit der Nutzung als Befüllventil ist es von Vorteil, wenn der Ventilsitzkörper 25 an seinem Außenumfang eine Drallerzeugungsstruktur 43 aufweist, die das durch den Hauptkanal hindurchströmende Hauptmedium um den Ventilsitzkörper 25 herum in Rotation versetzt. Die Rotation ist der axialen Strömung überlagert. Wie sich gezeigt hat, lässt sich mit einem derartigen Strömungsverlauf des Hauptmediums ein Behältnis schnellstmöglich befüllen.

Die Drallerzeugungsstruktur 43 befindet sich zweckmäßigerweise in dem sich zwischen der Ventilsitzfläche 27 und dem Medienauslass 19 erstreckenden Längenabschnitt des Hauptkanals 11.

Exemplarisch ist die Drallerzeugungsstruktur 43 von einem Wendelkörper 44 gebildet, der sich nach Art einer Schraubenwendel entlang des Außenumfanges des Ventilsitzkörpers 25 erstreckt. Der Wendelkörper 44 ist zweckmäßigerweise einstückig an dem sich dort befindenden rohrförmigen Längenabschnitt des Ventilsitzkörpers 25 angeordnet.

Zumindest in der Schließstellung hat das Ventilglied 6 in dem sich zwischen dem Arbeitsabschnitt 12 und dem Medienauslass 19 erstreckenden Längenabschnitt bevorzugt eine sich trichterähnlich erweiternde Kontur. Es ist von Vorteil, wenn die Drallerzeugungsstruktur 43 so gestaltet ist, dass sie dieser trichterförmigen Kontur Rechnung trägt und das Verformungsverhalten des Ventilgliedes 6 nicht beeinträchtigt. In diesem Zusammenhang ist es von Vorteil, wenn die Drallerzeugungsstruktur 43 eine an den sich in axialer Richtung verändernden Querschnitt des Hauptkanals 11 angepasste Außenkontur über ihre axiale Länge hin hat. Exemplarisch ist sie daher so gestaltet, dass sich ihr Außendurchmesser in Richtung zum Medienauslass 19 hin vergrößert bzw. ausgehend von ihrem dem Medienauslass 19 zugewandten Endabschnitt in Richtung zur Ventilsitzfläche 27 hin verringert.

Die Betätigungsmittel 28 sind beim Ausführungsbeispiel zur mechanischen Beaufschlagung des Ventilgliedes 6 ausgebildet. In diesem Zusammenhang enthalten sie zwei auf axialer Höhe der Ventilsitzfläche 27 im Bereich des Außenumfanges des schlauchförmigen Ventilgliedes 6 angeordnete Stempelglieder 45. Diese beiden Stempelglieder 45 liegen sich bezüglich der Längsachse 5 des Ventilgliedes 6 diametral gegenüber, was insbesondere aus Figuren 3 und 6 gut ersichtlich ist. Jedes Stempelglied 45 ist im Ventilgehäuse 2 zur Ermöglichung einer durch einen Doppelpfeil angedeuteten linearen Arbeitsbewegung 46 linear verschiebbar gelagert. Die Arbeitsbewegung 46 verläuft in einer zu der Längsachse 5 radialen Richtung.

Bei einem nicht gezeigten Ausführungsbeispiel sind mehr als zwei Stempelglieder 45 entlang des Außenumfanges des schlauchförmigen Ventilgliedes 6 verteilt angeordnet.

In einer aus Figuren 1 und 3 ersichtlichen ersten Arbeitsstellung nehmen die Stempelglieder 45 eine von der Längsachse 5 maximal radial beabstandete Position ein. Hier ist es dem Ventilglied 6 gestattet, die aus Figuren 1 und 3 ersichtliche maximale Offenstellung einzunehmen.

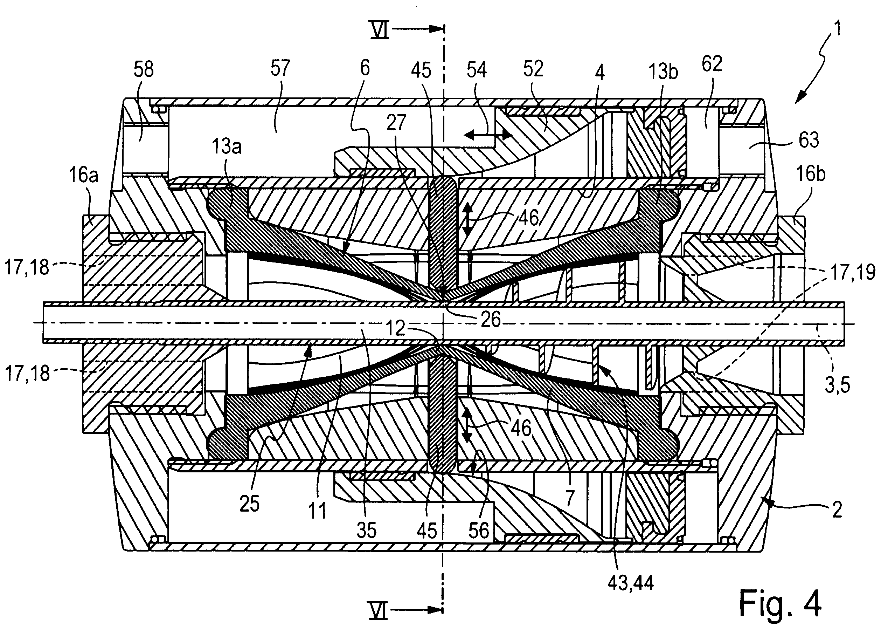

Ausgehend von der ersten Arbeitsstellung sind die Stempelglieder 45 durch Aufbringung einer in Richtung der Längsachse 5 orientierten Stellkraft in Richtung zu dem Ventilsitzkörper 25 verschiebbar, wobei sie durch Anlage am Außenumfang des Arbeitsabschnittes 12 ein radiales Zusammenquetschen der Umfangswand 7 hervorrufen. In einer maximal nach innen verlagerten zweiten Arbeitsstellung, die aus Figuren 4 und 6 ersichtlich ist, drücken die beiden Stempelglieder 45 den zwischen ihnen liegenden Arbeitsabschnitt 12 derart zusammen, dass zum einen die ersten Wandabschnitte 33a, 33b an die Ventilsitzfläche 27 des Ventilsitzkörpers 25 angedrückt werden und zum anderen die zweiten Wandabschnitte 34a, 34b ihrerseits direkt aneinander angedrückt werden, wie dies in Figur 6 illustriert ist.

Mithin kann durch die Stempelglieder 45 mehr oder weniger stark auf den Außenumfang des Ventilgliedes 6 eingewirkt werden, um wahlweise mindestens eine Offenstellung oder die Schließstellung des Ventilgliedes 6 hervorzurufen.

Die Linearführung der Stempelglieder 45 zur Ausführung der Arbeitsbewegungen 46 ergibt sich beim Ausführungsbeispiel dadurch, dass jedes Stempelglied 45 in einem sich bezüglich der Längsachse 5 radial erstreckenden Führungsschlitz 47 verschiebbar aufgenommen ist, der eine die Arbeitskammer 4 peripher umschließende rohrförmige Kammerwand 48 durchsetzt. Beim Ausführungsbeispiel erstrecken sich die beiden Führungsschlitze 47 außerdem auch noch radial durch eine einstückige oder mehrteilige Abstützhülse 49 hindurch, die von der rohrförmigen Kammerwand 48 koaxial umschlossen ist. Die Abstützhülse 49 hat bevorzugt einen sich ausgehend von ihren axialen Endabschnitten zu einem axial mittigen Bereich hin verjüngenden Querschnitt und stützt das schlauchförmige Ventilglied 6 in der maximalen Offenstellung in radialer Richtung ab. Kammerwand 48 und Abstützhülse 49 können abweichend vom Ausführungsbeispiel auch in Form eines einzigen Bauteils realisiert sein.

Bei den Stempelgliedern 45 handelt es sich exemplarisch um plattenförmige Elemente mit zur Längsachse 5 rechtwinkeliger Plattenebene. Jeder Führungsschlitz 47 hat dementsprechend bevorzugt einen länglichen Querschnitt.

Zum Aufbringen der Stellkraft auf die Stempelglieder 45 enthält das Quetschventil 1 zweckmäßigerweise einen ringförmig ausgebildeten Antriebskolben 52, der in einer das Ventilglied 6 konzentrisch umschließenden Ringkammer 53 im Ventilgehäuse 2 aufgenommen ist. Der Antriebskolben 52 ist in der Ringkammer 53 unter Ausführung einer mit der Achsrichtung der Längsachse 5 zusammenfallenden, durch einen Doppelpfeil illustrierten Antriebsbewegung 54 linear bewegbar.

Die Ringkammer 53 ist radial innen bevorzugt von der Kammerwand 48 und radial außen von einer hülsenförmig gestalteten Außenwand 55 begrenzt. Den stirnseitigen Abschluss bilden die beiden stirnseitigen Abschlusswände 14a, 14b.

Der Antriebskolben 52 weist eine bezüglich der Richtung der Antriebsbewegung 54 schräg oder geneigt verlaufende Kraftübertragungsfläche 56 auf, mit der er an den äußeren Endabschnitten der in die Ringkammer 53 hineinragenden Stempelglieder 45 anliegt. Bei Ausführung der Antriebsbewegung 54 gleiten die Kraftübertragungsflächen 56 am jeweils zugeordneten Stempelglied 45 ab und bewirken eine Kraftumlenkung, woraus die die Stempelglieder 45 nach innen schiebende Stellkraft resultiert.

Der Antriebskolben 52 ist zweckmäßigerweise durch Fluidkraft zu seiner Antriebsbewegung 54 antreibbar. Hierzu begrenzt der Antriebskolben 52 in der Ringkammer 53 eine ihm axial vorgelagerte Antriebskammer 57, die durch einen Antriebskanal 58 hindurch mit einem Antriebsfluid, beispielsweise mit Druckluft, beaufschlagbar ist.

In den meisten Fällen kann die Rückstellung der Stempelglieder 45 in die erste Arbeitsstellung durch einfaches Entlüften der Antriebskammer 57 hervorgerufen werden. Bei Bedarf kann die Rückstellbewegung jedoch dadurch unterstützt werden, dass der auf der der Antriebskammer 57 axial entgegengesetzten Seite des Antriebskolbens 52 liegende Abschnitt der Ringkammer 53 als weitere Antriebskammer 62 genutzt wird, die mit einem weiteren Antriebskanal 63 kommuniziert, so dass der Antriebskolben 52 in beiden Bewegungsrichtungen axial durch Druckbeaufschlagung bewegbar ist. Die Antriebsbewegung 54 kann in einer Richtung alternativ auch durch eine Rückstellfeder hervorgerufen werden, die zweckmäßigerweise in einer der beiden Antriebskammern 57, 62 angeordnet ist (nicht dargestellt).

Damit sich der Arbeitsabschnitt 12 der Umfangswand 7 in der Schließstellung des Ventilgliedes 6 optimal an die Ventilgliedfläche 27 anschmiegt, verfügt jedes Stempelglied 45 an seiner dem Ventilglied 6 zugewandten inneren Stirnfläche 64 bevorzugt über eine Aussparung 65, die in ihrer Kontur an den ihr zugewandten Abschnitt der Außenkontur des Ventilsitzabschnittes 26 angepasst ist. In der Schließstellung des Stempelgliedes 45 können daher der zugeordnete erste Wandabschnitt 33a, 33b des Arbeitsabschnittes 12 sowie maximal die Hälfte des Querschnittes des Ventilsitzabschnittes 26 in die betreffende Aussparung 65 eintauchen. In der Schließstellung des Ventilgliedes 6 ergibt sich dadurch zwischen jedem Stempelglied 45 und dem Ventilsitzabschnitt 26 ein Spalt, der der Außenkontur der Ventilsitzfläche 27 folgt und im Wesentlichen der Wanddicke des Arbeitsabschnittes 12 entspricht. Mithin wird der Arbeitsabschnitt 12 der Umfangswand 7 von den der Ventilsitzfläche 27 zugewandten Begrenzungsflächen 64a der Aussparungen 65 satt an die Ventilsitzfläche 27 angedrückt, was eine bestmögliche Abdichtung verspricht.

An der inneren Stirnfläche 64 schließt sich an die Aussparung 65 außen beidseits jeweils ein Flächenabschnitt der inneren Stirnfläche 64 an, der im Folgenden als Anpressfläche 64b bezeichnet sei und der in der zweiten Arbeitsstellung der Stempelglieder 45 auf die zweiten Wandabschnitte 34a, 34b einwirkt und diese gegeneinanderdrückt. Diese Anpressflächen 64b haben bevorzugt einen geradlinigen Verlauf, wobei sie allerdings zweckmäßigerweise ausgehend vom Rand der Aussparung 65 schräg nach außen verlaufen. Sich gegenüberliegende Anpressflächen 64b der beiden Stempelglieder 45 begrenzen somit bevorzugt einen sich zum seitlichen Rand der Stempelglieder 45 hin konisch verjüngenden Zwischenraum.

Bedingt durch die Aussparung 65 ist die dem Ventilglied 6 zugewandte innere Stirnfläche 64 jedes Stempelgliedes 45 also beim Ausführungsbeispiel in eine die Aussparung 65 definierende konkave Begrenzungsfläche 64a sowie zwei diese Begrenzungsfläche 64a beidseits flankierende Anpressflächen 64b unterteilt. In der Schließstellung drückt die Begrenzungsfläche 64a den ersten Wandabschnitt 33a, 33b des Arbeitsabschnittes 12 an die Ventilsitzfläche 27 an. Gleichzeitig werden die sich gegenüberliegenden zweiten Wandabschnitte 34a, 34b des Arbeitsabschnittes 12 durch die sich gegenüberliegenden Anpressflächen 64b der beiden Stempelglieder 45 direkt unter Abdichtung aneinander angedrückt.

Wie sich gezeigt hat, ergibt sich in der Schließstellung des Ventilgliedes 6 eine besonders hohe Abdichtqualität, wenn der Ventilsitzabschnitt 26 entsprechend der aus Figuren 3 und 6 ersichtlichen Gestaltung im Querschnitt betrachtet über eine längliche Außenkontur mit einer zur Richtung der Arbeitsbewegung 46 rechtwinkeligen Querschnitts-Längsachse verfügt. Der Ventilsitzabschnitt 26 hat zweckmäßigerweise einen Zentralbereich mit in der Richtung der Arbeitsbewegung 46 maximaler Dicke, wobei sich die Dicke ausgehend von diesem Zentralbereich zu einander entgegengesetzten Längsseiten hin verringert. Bei der Gestaltung des Ausführungsbeispiels verfügt der Ventilsitzabschnitt 26 über zwei seitlich auf einander entgegengesetzten Seiten flügelartig abstehende Vorsprünge 66, die insbesondere mit einer zu der Längsachse 5 parallelen Kante abschließen.

Bevorzugt hat der Ventilsitzabschnitt 26 im Querschnitt gesehen außen die Kontur einer Raute, die an zwei sich gegenüberliegenden Eckbereichen, die jeweils einer der inneren Stirnflächen 64 zugewandt sind, abgerundet ist. Der bevorzugt einzige Zusatzkanal 35 ist insbesondere im Zentrum dieses Querschnittes angeordnet.

Die geschilderte Gestaltung des Ventilsitzabschnittes 26 ist zwar besonders vorteilhaft, für die Realisierung der erfindungsgemäßen Funktionalität jedoch nicht zwingend erforderlich. Beispielsweise könnte der Ventilsitzabschnitt 26 zur Definition der Ventilsitzfläche 27 auch einen runden und bevorzugt kreisrunden Außenquerschnitt haben.

## Patentansprüche

1. Quetschventil, mit einem sich zwischen einem Medieneinlass (18) und einem Medienauslass (19) erstreckenden, einen das Hindurchströmen eines Hauptmediums ermöglichenden Hauptkanal (11) umschließenden schlauchförmigen Ventilglied (6), mit einem sich in dem Hauptkanal (11) unter Gewährleistung eines sowohl offenen Medieneinlasses (18) als auch offenen Medienauslasses (19) in der Längsrichtung des Hauptkanals (11) erstreckenden und an seinem Außenumfang eine zum Zusammenwirken mit dem Ventilglied (6) vorgesehene Ventilsitzfläche (27) definierenden Ventilsitzkörper (25), und mit Betätigungsmitteln (28), durch die das schlauchförmige Ventilglied (6) zwischen mindestens einer den Hauptkanal (11) zum Hindurchströmen des Hauptmediums freigebenden Offenstellung und einer an der Ventilsitzfläche (27) des Ventilsitzkörpers (25) dicht anliegenden Schließstellung quer zu seiner Längsrichtung verformbar ist, wobei der Ventilsitzkörper (25) in seinem Innern mindestens einen sich an der Ventilsitzfläche (27) vorbei erstreckenden Zusatzkanal (35) aufweist, durch den hindurch während einer gleichzeitig durch den Hauptkanal (11) hindurch stattfindenden Strömung eines Hauptmediums ein Zusatzmedium hindurchströmen kann, wobei die Wandung des Ventilsitzkörpers (25) innerhalb des Hauptkanals (11) durchbrechungslos ausgebildet ist, **dadurch gekennzeichnet, dass** der Ventilsitzkörper (25) den Hauptkanal (11) in dessen Längsrichtung Vollständig durchsetzt, wobei sich der Ventilsitzkörper (24) einschließlich des Zusatzkanals (35) einerseits zumindest bis in den Bereich des Medieneinlasses (18) und andererseits zumindest bis in den Bereich des Medienauslasses (19) erstreckt, sodass die Strömung des Zusatzmediums die Strömung des Hauptmediums im Hauptkanal (11) nicht beeinflusst.

2. Quetschventil nach Anspruch 1, **dadurch gekennzeichnet, dass** der Ventilsitzkörper (25) einschließlich des Zusatzkanals (25) jeweils ein Stück weit axial über den Medieneinlass (18) und den Medienauslass (19) hinausragt.

3. Quetschventil nach Anspruch 1 oder 2, **dadurch gekennzeichnet, dass** der Ventilsitzkörper (25) von einem Zusatzkanal (35) koaxial geradlinig durchsetzt ist, wobei er zweckmäßigerweise nur über diesen einen Zusatzkanal (35) verfügt.

4. Quetschventil nach einem der Ansprüche 1 bis 3, **dadurch gekennzeichnet, dass** es ein Ventilgehäuse (2) aufweist, das das schlauchförmige Ventilglied (6) aufnimmt und an dem der Ventilsitzkörper (25) axial beidseits der Ventilsitzfläche (27) einerseits im Bereich des Medieneinlasses (18) und andererseits im Bereich des Medienauslasses (19) fixiert ist.

5. Quetschventil nach einem der Ansprüche 1 bis 4, **dadurch gekennzeichnet, dass** der Ventilsitzkörper (25) im Bereich des Medieneinlasses (18) und im Bereich des Medienauslasses (19) jeweils mittels eines Befestigungskörpers (16a, 16b) in bevorzugt lösbarer Weise an einem Ventilgehäuse (2) des Quetschventils (1) fixiert ist, wobei jeder Befestigungskörper (16a, 16b) zweckmäßigerweise in das Ventilgehäuse (2) eingeschraubt ist.

6. Quetschventil nach Anspruch 5, **dadurch gekennzeichnet, dass** jeder Befestigungskörper (16a, 16b) axial und insbesondere koaxial von einer Aufnahmebohrung (38a, 38b) durchsetzt ist, in die der Ventilsitzkörper (25) mit einem bevorzugt rohrförmigen Befestigungsabschnitt (37a, 37b) eingesetzt und insbesondere eingesteckt ist, wobei der Ventilsitzkörper (25) zweckmäßigerweise beide Befestigungskörper (16a, 16b) durchsetzt und mit jeweils einem Endabschnitt (36a, 36b) axial außen aus dem zugeordneten Befestigungskörper (16a, 16b) herausragt.

7. Quetschventil nach Anspruch 5 oder 6, **dadurch gekennzeichnet, dass** beide Befestigungskörper (16a, 16b) axial durchbrochen sind, wobei mindestens eine Durchbrechung (17) des einen Befestigungskörpers (16a) den Medieneinlass und mindestens eine Durchbrechung (17) des anderen Befestigungskörpers (16b) den Medienauslass (19) definiert.

8. Quetschventil nach einem der Ansprüche 5 bis 7, **dadurch gekennzeichnet, dass** der dem Medienauslass (19) zugeordnete Befestigungskörper (16b) an der dem schlauchförmigen Ventilglied (6) axial abgewandten Seite eine sich zum Ventilglied (6) hin konisch verjüngende Ausnehmung aufweist, die zur Aufnahme eines Befüllstutzens eines mit dem Hauptmedium zu befüllenden Behältnisses ausgebildet ist.

9. Quetschventil nach einem der Ansprüche 1 bis 8, **dadurch gekennzeichnet, dass** der Ventilsitzkörper (25) an seinem Außenumfang eine das durch den Hauptkanal (11) hindurchströmende Hauptmedium um den Ventilsitzkörper (25) herum in Rotation versetzende Drallerzeugungsstruktur (43) aufweist, die zweckmäßigerweise von einem Wendelkörper (44) gebildet ist.

10. Quetschventil nach Anspruch 9, **dadurch gekennzeichnet, dass** sich der Außendurchmesser der Drallerzeugungsstruktur (43) in Richtung zum Medienauslass (19) hin vergrößert.

11. Quetschventil nach Anspruch 9 oder 10, **dadurch gekennzeichnet, dass** die Drallerzeugungsstruktur (43) in dem zwischen der Ventilsitzfläche (27) und dem Medienauslass (19) liegenden Längenabschnitt des Hauptkanals (11) angeordnet ist.

12. Quetschventil nach einem der Ansprüche 1 bis 11, **dadurch gekennzeichnet, dass** die Betätigungsmittel (28) zur mechanischen Beaufschlagung des Ventilgliedes (6) ausgebildet sind.

13. Quetschventil nach einem der Ansprüche 1 bis 12, **dadurch gekennzeichnet, dass** die Betätigungsmittel (28) mehrere auf axialer Höhe der Ventilsitzfläche (27) um den Außenfang des schlauchförmigen Ventilgliedes (6) herum verteilt angeordnete Stempelglieder (45) aufweisen, die durch Aufbringung einer Stellkraft in bezüglich der Längsachse (5) des Ventilgliedes (6) radialer Richtung beweglich sind, um auf den Außenumfang des Ventilgliedes (6) einzuwirken und dadurch wahlweise mindestens eine Offenstellung oder die Schließstellung des Ventilgliedes (6) hervorzurufen, wobei die Betätigungsmittel (28) zweckmäßigerweise genau zwei Stempelglieder (45) aufweisen, die auf sich einander diametral entgegengesetzten Seiten im Bereich des Außenumfanges des schlauchförmigen Ventilgliedes (6) angeordnet sind und die jeweils gleichzeitig entweder aufeinander zu gerichtet oder voneinander weg gerichtet bewegbar sind.

14. Quetschventil nach Anspruch 13, **dadurch gekennzeichnet, dass** die Betätigungsmittel (28) einen das Ventilglied (6) konzentrisch umschließenden und durch Fluidkraft zu einer Antriebsbewegung (54) in der Längsrichtung des Ventilgliedes (6) antreibbaren Antriebskolben (52) enthalten, der im Rahmen einer Kraftumlenkung zur Erzeugung der Stellkraft mit den Stempelgliedern (45) kooperiert.

15. Quetschventil nach Anspruch 13 oder 14, **dadurch gekennzeichnet, dass** der Ventilsitzkörper (25) über einen die Ventilsitzfläche (27) definierenden Ventilsitzabschnitt (26) verfügt, dessen Querschnitt kleiner ist als der Querschnitt des Hauptkanals (11) in jeder Offenstellung des Ventilgliedes (6), wobei jedes Stempelglied (45) an seiner dem Ventilglied (6) zugewandten inneren Stirnfläche (64) eine an den ihr zugewandten Abschnitt der Außenkontur des Ventilsitzabschnittes (26) angepasste Aussparung (65) aufweist, derart, dass in der Schließstellung des Ventilgliedes (6) eine den Hauptkanal (11) umgrenzende Umfangswand (7) des Ventilgliedes (6) von den Begrenzungsflächen (64a) der Aussparungen (65) der Stempelglieder (45) dichtend an die Ventilsitzfläche (27) angedrückt wird.

16. Quetschventil nach einem der Ansprüche 1 bis 15, **dadurch gekennzeichnet, dass** die Betätigungsmittel (28) über zwei sich bezüglich der Längsachse (5) des Ventilgliedes (6) diametral gegenüberliegende Stempelglieder (45) verfügen, die an den einander zugewandten inneren Stirnflächen (64) jeweils eine von einer konkaven Begrenzungsfläche (64a) begrenzte Aussparung (65) und zwei sich an einander entgegengesetzten Seiten an die Aussparung (65) anschließende Anpressflächen (64b) aufweisen, wobei in der Schließstellung des Ventilgliedes (6) Abschnitte der Umfangswand (7) des Ventilgliedes (6) von den Begrenzungsflächen (64a) der Aussparungen (65) an die Ventilsitzfläche (27) angedrückt werden und weitere Abschnitte der Umfangswand (7) des Ventilgliedes (6) durch die sich paarweise gegenüberliegenden Anpressflächen (64b) der beiden Stempelglieder (45) direkt unter Abdichtung aneinander angedrückt werden.

17. Quetschventil nach einem der Ansprüche 13 bis 16, **dadurch gekennzeichnet, dass** der Ventilsitzkörper (25) über einen die Ventilsitzfläche (27) definierenden Ventilsitzabschnitt (26) verfügt, der im Querschnitt gesehen eine längliche Außenkontur mit zur Bewegungsrichtung der Stempelglieder (45) rechtwinkeliger Querschnitt-Längsachse aufweist, wobei diese längliche Außenkontur vorzugsweise entsprechend einer Raute gestaltet ist, die an zwei sich gegenüberliegenden Eckbereichen abgerundet ist.

## Claims

1. Pinch valve comprising a tubular valve member (6), which extends between a media inlet (18) and a media outlet (9) and encloses a main passage (11) facilitating the flow-through of a main medium, further comprising a valve seat body (25), which extends in the main passage (11) while ensuring both an open media inlet (18) and an open media outlet (19) in the longitudinal direction of the main passage (11) and which defines at its outer circumference a valve seat surface (27) provided for acting together with the valve member (6), and further comprising actuating means (28), by which the tubular valve member (6) is deformable transversely to its longitudinal direction between at least one open position opening up the main passage for the main medium to flow through and a closed position in tight contact with the valve seat surface (27) of the valve seat body (25), wherein the valve body (25) has in its interior at least one auxiliary passage (35), which extends past the valve seat surface (27) and through which an auxiliary medium can flow while a main medium simultaneously flows through the main passage (11), wherein the wall of the valve seat body (25) is formed without openings within the main passage (11), **characterised in that** the valve seat body (25) passes through the whole of the main passage (11) in its longitudinal direction, wherein the valve seat body (25) including the auxiliary passage (35) extends on the one hand at least to the region of the media inlet (18) and on the other hand at least to the region of the media outlet (19), so that the flow of the auxiliary medium does not influence the flow of the main medium in the main passage (11).

2. Pinch valve according to claim 1, **characterised in that** the valve seat body (25) including the auxiliary passage (35) axially projects to some degree beyond the media inlet (18) and the media outlet (19).

3. Pinch valve according to claim 1 or 2, **characterised in that** an auxiliary passage (35) coaxially passes in a straight line through the valve seat body (25), the valve seat body (25) expediently having only this one auxiliary passage (35).

4. Pinch valve according to any of claims 1 to 3, **characterised in that** it comprises a valve housing (2), which accommodates the tubular valve member (6) and to which the valve seat body (25) is axially secured on both sides of the valve seat surface (27) in the region of the media inlet (18) on the one hand and of the media outlet (19) on the other hand.

5. Pinch valve according to any of claims 1 to 4, **characterised in that** the valve seat body (25) is secured, preferably in a releasable way, to a valve housing (2) of the pinch valve (1) by means of a fastening body (16a, 16b) each in the region of the media inlet (18) and in the region of the media outlet (19), the fastening body (16a, 16b) being expediently screwed into the valve housing (2).

6. Pinch valve according to claim 5, **characterised in that** a location bore (38a, 38b), into which the valve seat body (25) is installed and in particular inserted with a preferably tubular fastening section (37a, 37b), passes axially and in particular coaxially through each fastening body (16a, 16b), wherein the valve seat body (25) expediently passes through both fastening bodies (16a, 16b) and projects axially outwards with an end section (36a, 36b) each from the associated fastening body (16a, 16b).

7. Pinch valve according to claim 5 or 6, **characterised in that** both fastening bodies (16a, 16b) have through holes (17), wherein at least one through hole (17) of the one fastening body (16a) defines the media inlet and at least one through hole (17) of the other fastening body (16b) defines the media outlet (19).

8. Pinch valve according to any of claims 5 to 7, **characterised in that** the fastening body (16b) assigned to the media outlet (19) has a recess designed for accommodating a filling connector of a container to be filled with the main medium and tapering conically towards the valve member (6) on the side which is axially remote from the tubular valve member (6).

9. Pinch valve according to any of claims 1 to 8, **characterised in that** the valve seat body (25) has at its outer circumference a swirl generating structure (43), which causes the main medium flowing through the main passage (11) to rotate around the valve seat body (25) and which is expediently represented by a helical body (44).

10. Pinch valve according to claim 9, **characterised in that** the outer diameter of the swirl generating structure (43) increases towards the media outlet (19).

11. Pinch valve according to claim 9 or 10, **characterised in that** the swirl generating structure (43) is located in the longitudinal section of the main passage (11) between the valve seat surface (27) and the media outlet (19).

12. Pinch valve according to any of claims 1 to 11, **characterised in that** the actuating means (28) are designed for mechanically acting on the valve member (6).

13. Pinch valve according to any of claims 1 to 12, **characterised in that** the actuating means (28) comprise a plurality of plunger members (45), which are distributed around the outer circumference of the tubular valve member (6) at the axial level of the valve seat surface (27) and which are movable in the radial direction relative to the longitudinal axis (5) of the valve member (6) by the application of an actuating force in order to act on the outer circumference of the valve member (6), thereby optionally providing at least one open position or the closed position of the valve member (6), wherein the actuating means (28) expediently comprise two plunger members (45), which are located on diametrically opposite sides in the region of the outer circumference of the tubular valve member (6) and which can be moved simultaneously either towards one another or away from one another.

14. Pinch valve according to claim 13, **characterised in that** the actuating means (28) comprise a drive piston (52), which concentrically encloses the valve member (6) and can be driven by fluid power to perform a drive movement (54) in the longitudinal direction of the valve member (6) and which cooperates with the plunger members (45) in the generation of the actuating force within the process of a force reversal.

15. Pinch valve according to claim 13 or 14, **characterised in that** the valve seat body (25) comprises a valve seat section (26), which defines the valve seat surface (27) and the cross-section of which is smaller than the cross-section of the main passage (11) in each open position of the valve member (6), wherein each plunger member (45) has on its inner end face (64) facing the valve member (6) a recess (65) matching the facing section of the outer contour of the valve seat section (26), so that in the closed position of the valve member (6) a circumferential wall (7) of the valve member (6), which bounds the main passage (11) is pressed against the valve seat surface (27) by the boundary surfaces (64a) of the recesses (65) of the plunger members (45) to form a seal.

16. Pinch valve according to any of claims 1 to 15, **characterised in that** the actuating means (28) comprise two plunger members (45), which are located diametrically opposite one another relative to the longitudinal axis (5) of the valve member (6) and which have on each of the facing inner end faces (64) a recess (65) bounded by a concave boundary surface (64a) and two press-on surfaces (64b) adjoining the recess (65) on opposite sides, wherein, in the closed position of the valve member (6), sections of the circumferential wall (7) of the valve member (6) are pressed against the valve seat surface (27) by the boundary surfaces (64a) of the recesses (65) and further sections of the circumferential wall (7) are directly pressed against one another while forming a seal by the oppositely located paired press-on surfaces (64b) of the two plunger members (45).

17. Pinch valve according to any of claims 13 to 16, **characterised in that** the valve seat body (25) comprises a valve seat section (26), which defines the valve seat surface (27) and which, if viewed in cross-section, has an oblong outer contour with a cross-section longitudinal axis perpendicular to the direction of movement of the plunger members (45), wherein this oblong outer contour is preferably designed as a rhombus which is rounded in two opposite corner regions.

## Revendications

1. Vanne à manchon, avec un organe de vanne (6) en forme de tube flexible s'étendant entre une entrée de milieu (18) et une sortie de milieu (19), renfermant un canal principal (11) permettant le passage d'un flux d'un milieu principal, avec un corps de siège de vanne (25) s'étendant dans le canal principal (11) en assurant à la fois une entrée de milieu (18) ouverte et une sortie de milieu (19) ouverte dans le sens de la longueur du canal principal (11) et définissant, au niveau de sa périphérie extérieure, une surface de siège de vanne (27) prévue pour coopérer avec l'organe de vanne (6), et avec des moyens d'actionnement (28), à travers lesquels l'organe de vanne (6) en forme de tuyau flexible peut être déformé de manière transversale par rapport à son sens de la longueur entre au moins une position ouverte dégageant le canal principal (11) servant à faire passer un flux du milieu principal et une position fermée reposant de manière étanche au niveau de la surface de siège de vanne (27) du corps de siège de vanne (25), dans laquelle le corps de siège de vanne (25) présente, dans son espace intérieur, au moins un canal supplémentaire (35) s'étendant le long de la surface de siège de vanne (27), à travers lequel un flux de milieu supplémentaire peut passer pendant un écoulement d'un milieu principal ayant lieu dans le même temps à travers le canal principal (11), dans laquelle la paroi du corps de siège de vanne (25) est réalisée sans interruption à l'intérieur du canal principal (11), **caractérisée en ce que** le corps de siège de vanne (25) traverse totalement le canal principal (11) dans le sens de sa longueur, dans laquelle le corps de siège de vanne (24), y compris le canal supplémentaire (35), s'étend d'une part au moins jusque dans la zone de l'entrée de milieu (18) et d'autre part au moins jusque dans la zone de la sortie de milieu (19) de sorte que l'écoulement du milieu supplémentaire n'influe pas sur l'écoulement du milieu principal dans le canal principal (11).

2. Vanne à manchon selon la revendication 1, **caractérisée en ce que** le corps de siège de vanne (25) y compris le canal supplémentaire (25) fait saillie respectivement d'une partie sur une grande distance axiale au-delà de l'entrée de milieu (18) et de la sortie de milieu (19).

3. Vanne à manchon selon la revendication 1 ou 2, **caractérisée en ce que** le corps de siège de vanne (25) est traversé de manière coaxiale et rectiligne par un canal supplémentaire (35), dans laquelle il dispose de manière appropriée seulement de ce canal supplémentaire (35).

4. Vanne à manchon selon l'une quelconque des revendications 1 à 3, **caractérisée en ce qu'**elle présente un boîtier de vanne (2), qui reçoit l'organe de vanne (6) en forme de tuyau flexible et au niveau duquel le corps de siège de vanne (25) est fixé de manière axiale de part et d'autre de la surface de siège de vanne (27), d'une part dans la zone de l'entrée de milieu (18) et d'autre part dans la zone de la sortie de milieu (19).

5. Vanne à manchon selon l'une quelconque des revendications 1 à 4, **caractérisée en ce que** le corps de siège de vanne (25) est fixé dans la zone de l'entrée de milieu (18) et dans la zone de la sortie de milieu (19) respectivement au moyen d'un corps de fixation (16a, 16b) de préférence de manière amovible au niveau d'un boîtier de vanne (2) de la vanne à manchon (1), dans laquelle chaque corps de fixation (16a, 16b) est vissé de manière appropriée dans le boîtier de vanne (2).

6. Vanne à manchon selon la revendication 5, **caractérisée en ce que** chaque corps de fixation (16a, 16b) est traversé de manière axiale et en particulier de manière coaxiale par un alésage de réception (38a, 38b), dans lequel le corps de siège de vanne (25) est inséré et en particulier est enfiché par une section de fixation (37a, 37b) de préférence de forme tubulaire, dans laquelle le corps de siège de vanne (25) traverse de manière appropriée deux corps de fixation (16a, 16b) et fait saillie, par respectivement une section d'extrémité (36a, 36b), côté extérieur axialement du corps de fixation (16a, 16b) associé.

7. Vanne à manchon selon la revendication 5 ou 6, **caractérisée en ce que** les deux corps de fixation (16a, 16b) sont interrompus de manière axiale, dans laquelle au moins un ajour (17) de l'un des corps de fixation (16a) définit l'entrée de milieu et au moins un ajour (17) de l'autre corps de fixation (16b) définit la sortie de milieu (19).

8. Vanne à manchon selon l'une quelconque des revendications 5 à 7, **caractérisée en ce que** le corps de fixation (16b) associé à la sortie de milieu (19) présente, au niveau du côté opposé de manière axiale à l'organe de vanne (6) en forme de tuyau flexible, un évidement se rétrécissant de manière conique en direction de l'organe de vanne (6), lequel évidement est réalisé afin de recevoir une tubulure de remplissage d'un récipient à remplir du milieu principal.

9. Vanne à manchon selon l'une quelconque des revendications 1 à 8, **caractérisée en ce que** le corps de siège de vanne (25) présente, au niveau de sa périphérie extérieure, une structure de génération de moment cinétique (43) amenant en rotation tout autour du corps de siège de vanne (25) le flux de milieu principal traversant le canal principal (11), laquelle est formée de manière appropriée par un corps hélicoïdal (44).

10. Vanne à manchon selon la revendication 9, **caractérisée en ce que** le diamètre extérieur de la structure de génération de moment cinétique (43) s'agrandit en direction de la sortie de milieu (19).

11. Vanne à manchon selon la revendication 9 ou 10, **caractérisée en ce que** la structure de génération de moment cinétique (43) est disposée dans la section longitudinale, se trouvant entre la surface de siège de vanne (27) et la sortie de milieu (19), du canal principal (11).

12. Vanne à manchon selon l'une quelconque des revendications 1 à 11, **caractérisée en ce que** les moyens d'actionnement (28) sont réalisés afin de soumettre à une action mécanique l'organe de vanne (6).

13. Vanne à manchon selon l'une quelconque des revendications 1 à 12, **caractérisée en ce que** les moyens d'actionnement (28) présentent plusieurs organes à matrice (45) disposés de manière répartie tout autour de la périphérie extérieure de l'organe de vanne (6) en forme de tuyau flexible sur une hauteur axiale de la surface de siège de vanne (27), lesquels sont mobiles, par l'application d'une force de réglage, dans une direction radiale par rapport à l'axe longitudinal (5) de l'organe de vanne (6) afin d'agir sur la périphérie extérieure de l'organe de vanne (6) et ce faisant d'entraîner au choix au moins une position ouverte ou la position fermée de l'organe de vanne (6), dans laquelle les moyens d'actionnement (28) présentent de manière appropriée précisément deux organes à matrice (45), qui sont disposés sur des côtés diamétralement opposés dans la zone de la périphérie extérieure de l'organe de vanne (6) en forme de tuyau flexible et qui peuvent être déplacés respectivement de manière simultanée soit en étant dirigés l'un vers l'autre soit en étant orientés de manière à s'éloigner l'un de l'autre.

14. Vanne à manchon selon la revendication 13, **caractérisée en ce que** les moyens d'actionnement (28) contiennent un piston d'entraînement (52) renfermant de manière concentrique l'organe de vanne (6) et pouvant être entraîné par la force d'un fluide en un mouvement d'entraînement (54) dans le sens de la longueur de l'organe de vanne (6), lequel piston d'entraînement coopère avec les organes à matrice (45) dans le cadre d'une déviation de force afin de générer la force de réglage.

15. Vanne à manchon selon la revendication 13 ou 14, **caractérisée en ce que** le corps de siège de vanne (25) dispose d'une section de siège de vanne (26) définissant la surface de siège de vanne (27), dont la section transversale est plus petite que la section transversale du canal principal (11) dans chaque position ouverte de l'organe de vanne (6), dans laquelle chaque organe à matrice (45) présente, au niveau de sa surface frontale (64) intérieure tournée vers l'organe de vanne (6), un creux (65) adapté à la section, tournée vers la surface frontale, du contour extérieur de la section de siège de vanne (26), de telle manière que dans la position fermée de l'organe de vanne (6), une paroi périphérique (7) délimitant le canal principal (11), de l'organe de vanne (6) est pressée par les surfaces de délimitation (64a) des creux (65) des organes à matrice (45) de manière à assurer l'étanchéité sur la surface de siège de vanne (27).

16. Vanne à manchon selon l'une quelconque des revendications 1 à 15, **caractérisée en ce que** les moyens d'actionnement (28) disposent de deux organes à matrice (45) se faisant face diamétralement par rapport à l'axe longitudinal (5) de l'organe de vanne (6), lesquels présentent, au niveau des surfaces frontales (64) intérieures tournées les unes vers les autres, respectivement un creux (65) délimité par une surface de délimitation (64a) concave et deux surfaces de pression (64b) se raccordant au creux (65) au niveau de côtés opposés les uns aux autres, dans laquelle dans la position fermée de l'organe à vanne (6), des sections de la paroi périphérique (7) de l'organe à vanne (6) sont pressées par les surfaces de délimitation (64a) des creux (65) sur la surface de siège de vanne (27) et d'autres sections de la paroi périphérique (7) de l'organe à vanne (6) sont pressées les unes contre les autres directement en assurant l'étanchéification par les surfaces de pression (64b) se faisant face par paire des deux organes à matrice (45).

17. Vanne à manchon selon l'une quelconque des revendications 13 à 16, **caractérisée en ce que** le corps de siège de vanne (25) dispose d'une section de siège de vanne (26) définissant la surface de siège de vanne (27), laquelle présente, vue dans la section transversale, un contour extérieur allongé avec un axe longitudinal de section transversale à angle droit par rapport à la direction de déplacement des organes à matrice (45), dans laquelle ledit contour extérieur allongé est configuré de préférence de manière à correspondre à un losange, qui est arrondi au niveau de zones de coin se faisant face.
